# EUROPÄISCHE PATENTSCHRIFT

(11) **EP 3 790 758 B1**
(45) Veröffentlichungstag und Bekanntmachung des Hinweises auf die Patenterteilung: **07.06.2023**
(21) Anmeldenummer: 19719490.5
(22) Anmeldetag: 23.04.2019
(51) Int. Cl.: B60L 5/20, B60L 5/22

(54) **VORRICHTUNG ZUR BEFESTIGUNG EINES SCHLEIFELEMENTS AN EINEM STROMABNEHMER**
DEVICE FOR FASTENING A SLIDING ELEMENT TO A CURRENT COLLECTOR
DISPOSITIF DE FIXATION D'UN ÉLÉMENT FROTTEUR À UN COLLECTEUR DE COURANT

(30) Priorität: 07.05.2018 DE 102018110902
(43) Veröffentlichungstag der Anmeldung: 17.03.2021
(73) Patentinhaber: PanTrac GmbH, 10367 Berlin (DE)
(72) Erfinder: GROTHE, Bastian, 10318 Berlin (DE)
(74) Vertreter: Gulde & Partner
(86) Internationale Anmeldenummer: PCT/EP2019/060289
(87) Internationale Veröffentlichungsnummer: WO 2019/214931

(56) Entgegenhaltungen:
- EP-A1- 0 462 909
- EP-A1- 0 947 375
- EP-A2- 0 384 972
- WO-A1-2004/020241

## Beschreibung

Die Erfindung betrifft einen Stromabnehmer zur Ableitung von elektrischer Energie von einer Fahrleitung auf ein elektrisch antreibbares Fahrzeug sowie ein elektrisch antreibbares Fahrzeug.

Schleifelemente gattungsgemäßer Art sind bekannt. Sie sind Bestandteile eines Stromabnehmers, der mit einem elektrisch antreibbaren Fahrzeug verbunden ist. Das Schleifelement steht in Kontakt mit einer ortsfesten Fahrleitung und dient der Ableitung elektrischer Energie von der Fahrleitung auf das elektrisch antreibbare Fahrzeug.

Die Schleifelemente umfassen einen Träger und wenigstens ein auf dem Träger angeordnetes Kohleschleifstück. Eine Verbindung zwischen dem Träger und dem wenigstens einen Kohleschleifstück erfolgt bekanntermaßen durch Verkleben. Hierbei wird ein elektrisch leitfähiger Kleber eingesetzt. Ziel ist es, einen möglichst niedrigen Übergangswiderstand zwischen den Kohleschleifstücken und dem Träger zu erzielen. Die Verbindung kann auch durch andere geeignete Maßnahmen, beispielsweise Klemmen, Nieten, Schrauben, Löten oder dergleichen erfolgen.

Der Träger kann auch einen Luftkanal aufweisen, der mit einem Druckluftanschluss verbunden ist. Dieser Druckluftkanal erstreckt sich im Wesentlichen über die gesamte Länge des Trägers. Dieser Druckluftkanal dient der Erkennung einer Beschädigung oder eines Verschleißes der Kohleschleifstücke. Bei zu starker Beschädigung oder zu starkem Verschleiß wird der unter Druckluft stehende Kanal freigelegt, so dass ein Druckabfall stattfindet, der durch ein entsprechendes Steuergerät detektiert wird. Der Stromabnehmer wird dann abgesenkt, das heißt von der Fahrleitung getrennt.

Bekannte Schleifelemente sind mittels Schraubverbindungen am oberen Ende des Stromabnehmers oder einer dort angebrachten Wippe fixiert. Weitere Anschlüsse, wie beispielsweise für Druckluft oder elektrische Kontaktierungen, werden separat angebracht.

Beim Wechsel der Schleifelemente müssen in der Regel mehrere Schraubverbindungen für den mechanischen Halt, weitere Schraubverbindungen für den elektrischen Anschluss und gegebenenfalls mehrere pneumatische Anschlüsse für die Druckluftübertragung gelöst und nach dem Austausch des Schleifelements beim Austauschelement neu fixiert werden. Dadurch entsteht ein hoher zeitlicher Aufwand. Da der Wechsel der Schleifelemente üblicherweise auf dem Dach des Fahrzeuges erfolgt, liegen zudem erschwerte Bedingungen vor. Daraus resultiert ein erhöhtes Risiko von Fehlmontagen. Insgesamt werden durch den Wechsel von Schleifelementen mit bekanntem Befestigungssystem in Form von Schraubverbindungen durch den Zeitaufwand und die Fehleranfälligkeit hohe Kosten generiert.

EP 0 947 375 A1 offenbart ein Stromabnehmersystem, das wenigstens einen Stromabnehmer mit wenigstens einer quer zur Fahrtrichtung angeordneten Schleifleiste umfasst. Die Schleifleiste ist am Stromabnehmer wechselbar gehaltert.

EP 0 384 972 A2 offenbart ein Sicherheitssystem für absenkbare Stromabnehmer von Fahrzeugen. Das Kohleschleifstück weist einen Hohlraum für ein unter Druck stehendes Medium auf.

WO 2004020241 A1 zeigt eine Schleifleiste für einen Stromabnehmer mit Druckluftkanal zur Überwachung von deren Verschleißzustand und mit einer Befestigungseinrichtung mit integrierter Druckluftdurchführung, die aber keine Rastelemente sondern eine Verschraubung umfasst.

Es ist daher Aufgabe der Erfindung, ein Befestigungssystem für Kohleschleifleisten auf einem Stromabnehmer oder einer dort angebrachten Wippe eines elektrisch betreibbaren Fahrzeuges vorzuschlagen, mit dem der Wartungsprozess vereinfacht, beschleunigt und kostengünstiger durchgeführt werden kann.

Erfindungsgemäß wird diese Aufgabe durch einen Stromabnehmer mit den in Anspruch 1 genannten Merkmalen gelöst. Vorteilhafte Ausgestaltungen und Weiterentwicklungen sind in den abhängigen Schutzansprüchen beschrieben.

Bei einer erfindungsgemäßen Vorrichtung zur Befestigung eines Schleifelements an einem Stromabnehmer oder einer dort angebrachten Wippe zur Ableitung von elektrischer Energie von einer Fahrleitung auf ein elektrisch antreibbares Fahrzeug ist die Fahrleitung ortsfest angeordnet und der Stromabnehmer mit dem Fahrzeug verbunden. Nachfolgend wird immer davon ausgegangen, dass das Schleifelement auf einem Stromabnehmer oder einer dort angebrachten Wippe befestigt ist, auch wenn nur der Stromabnehmer genannt wird. Das Schleifelement umfasst einen Träger und wenigstens ein auf dem Träger angeordnetes Kohleschleifstück. Zwischen dem Schleifelement und dem Stromabnehmer ist mindestens ein Befestigungspunkt zur Befestigung des Schleifelements an dem Stromabnehmer ausgebildet. Durch die vorzugsweise Ausbildung von mindestens zwei Befestigungspunkten zwischen dem Schleifelement und dem Stromabnehmer ist eine sichere Befestigung des Schleifelements an dem Stromabnehmer und gleichzeitig auch die sichere Lage bzw. Ausrichtung des Schleifelements gegenüber dem Stromabnehmer gewährleistet.

In jedem Befestigungspunkt zwischen dem Schleifelement und dem Stromabnehmer ist auf Seiten des Schleifelements mindestens ein Rastmittel und auf Seiten des Stromabnehmers jedem der Rastmittel eine ihm zugeordnete Aufnahme für dieses Rastmittel angeordnet. Dabei wird jedes Rastmittel und die ihm jeweils zugeordnete Aufnahme durch Einführen und Einrasten des Rastmittels in die ihm zugeordnete Aufnahme lösbar miteinander in Eingriff gebracht. In anderen Worten ist in jedem Befestigungspunkt am Schleifelement eine Anzahl Rastmittel ausgebildet, und am Stromabnehmer eine korrespondierende Anzahl von den Rastmitteln zugeordnete Aufnahmen, die örtlich so angeordnet sind, dass die Rastmittel zur Befestigung des Schleifelements in die Aufnahmen am Stromabnehmer eingeführt werden, wo sie in der Aufnahme einrasten. Die Vorrichtung kann daher auch als "Klicksystem" bezeichnet werden, bei dem die Rastmittel in die jeweilige Aufnahme "eingeklickt" werden.

Der Träger des Schleifelements weist einen Druckluftkanal für Druckluftüberwachung beziehungsweise eine Beschädigungs- oder Verschleißanzeige des wenigstens einen Kohleschleifstückes auf. Dabei wird dem Druckluftkanal Druckluft zugeführt und diese durch ein Steuergerät detektiert. Wenn das mindestens eine Kohleschleifstück beschädigt oder zu weit verschlissen ist, erfolgt ein Druckabfall, der von dem Steuergerät detektiert wird. In der Folge wird der Stromabnehmer abgesenkt und damit von der Fahrleitung getrennt.

Bei dem erfindungsgemäßen Stromabnehmer weisen sowohl das Rastmittel als auch die ihm zugeordnete Aufnahme jeweils korrespondierende Durchführungen auf, die eine durchgehende Durchführung für eine Druckluftübertragung vom Stromabnehmer in den Druckluftkanal im Träger bilden, wenn das Rastmittel und die ihm zugeordnete Aufnahme lösbar miteinander in Eingriff gebracht sind. Die jeweiligen Durchführungen im Rastmittel und der zugeordneten Aufnahme bilden dabei einen Abschnitt einer Druckluftdurchführung vom Stromabnehmer zu dem Druckluftkanal im Träger des Schleifelements. Werden Rastmittel und Aufnahme in Eingriff gebracht, bildet die Durchführung des Rastmittels die Fortsetzung der Durchführung der Aufnahme bis hin zum Druckluftkanal des Trägers. Durch das Ineinandergreifen der jeweiligen Durchführungen im Rastmittel und der zugeordneten Aufnahme beim Einführen und Einrasten des Rastmittels in die zugeordnete Aufnahme entsteht somit der pneumatische Anschluss für die Druckluftübertragung, die nun nicht mehr separat angeschlossen werden muss. Der Austausch eines Schleifelements wird damit erheblich beschleunigt und vereinfacht. Der elektrische Anschluss der Schleifelemente ist hiervon unberührt. Dieser erfolgt vorzugsweise mit mindestens einer Schraubverbindung.

In einer nächsten Ausführungsform kann das Rastmittel nach außen gerichtete Vorsprünge aufweisen, die beim Einführen des Rastmittels in die ihm zugeordnete Aufnahme hinter korrespondierenden Vorsprüngen in der Aufnahme und/oder in korrespondierende Vertiefungen in der Aufnahme einrasten. Demnach sind im Inneren der Aufnahme, in das das Rastmittel eingeführt wird, Vorsprünge ausgebildet, die in den Bereich, in dem das Rastmittel eingeführt wird, hineinragen. Alternativ oder gleichzeitig können Vertiefungen im Inneren der Aufnahme ausgebildet sein, die den Vorsprüngen am Rastmittel entsprechen. Wird nun das Rastmittel mit einer entsprechenden Kraftaufwendung in die Aufnahme eingeführt, werden die Vorsprünge des Rastmittels hinter die Vorsprünge im Inneren der Aufnahme geschoben und/oder in den Bereich der Vertiefungen im Inneren der Aufnahme gebracht, so dass die Vorsprünge des Rastmittels fixiert werden und das Rastmittel in dieser Position einrastet. Der Fachmann wird ohne Weiteres erkennen, dass die Ausbildung von Vorsprüngen und Vertiefungen auch in umgekehrter Weise erfolgen kann, so dass die Vorsprünge im Inneren der Aufnahme und die korrespondierenden Vorsprünge und/oder Vertiefungen am Rastmittel ausgebildet sein können.

Vorzugsweise können dem Rastmittel und/oder der Aufnahme Dichtelemente zugeordnet sein, die eine Leckage der Druckluft verhindern.

Die nach außen gerichteten Vorsprünge des Rastmittels und die korrespondierenden Vorsprünge und/oder Vertiefungen der Aufnahme können entlang des gesamten Umfangs des Rastmittels und/oder des Inneren der Aufnahme ausgebildet oder abschnittsweise unterbrochen sein. Unterbrechungen können beispielweise vorgesehen sein, um den Material- und/oder Herstellungsaufwand zur Ausbildung der Vorsprünge und/oder Vertiefungen zu reduzieren, aber auch um das Einbringen des Rastmittels in und Lösen des Rastmittels aus der Aufnahme zu vereinfachen. Sind beispielsweise Vorsprünge des Rastmittels und Vorsprünge der Aufnahme nur abschnittsweise ausgebildet, so können das Rastmittel und die Aufnahme zum Lösen relativ zueinander gedreht werden, so dass die jeweiligen Vorsprünge derart zueinander versetzt angeordnet sind, dass das Rastmittel ohne großen Kraftaufwand aus der Aufnahme gelöst werden kann.

In einer weiteren Ausführungsform können die Vorsprünge des Rastmittels als beweglich gelagerte Elemente ausgebildet und mit einem Vorspannmechanismus verbunden sein, so dass die beweglich gelagerten Elemente beim Einführen des Rastmittels in die zugeordnete Aufnahme in das Innere des Rastmittels hineingedrückt und durch den Vorspannmechanismus nach dem Passieren der Vorsprünge und/oder beim Erreichen der Vertiefungen aus dem Inneren des Rastmittels herausgedrückt werden. Durch die bewegliche Ausbildung der Vorsprünge und die Rückstellung in die Ausgangsposition durch den Vorspannmechanismus wird das Einführen des Rastmittels in die zugeordnete Aufnahme und das Lösen des Rastmittels aus der Aufnahme erleichtert. Für den Fachmann ist erkennbar, dass auch beim Lösen des Rastmittels die beweglich gelagerten Elemente ins Innere des Rastmittels hineingedrückt und durch den Vorspannmechanismus nach dem Passieren der Vorsprünge im Inneren der Aufnahme wieder herausgedrückt werden. Gleichermaßen ist für den Fachmann ersichtlich, dass bei gleicher Funktionsweise alternativ beweglich gelagerte Elemente im Inneren der Aufnahme angeordnet sein können, während am Rastmittel korrespondierende Vorsprünge und/oder Vertiefungen vorgesehen sein können.

Weiterhin kann der Vorspannmechanismus ein Bedienelement zur manuellen Betätigung aufweisen, um die beweglich gelagerten Elemente in das Innere des Rastmittels zu bewegen. Dieses Bedienelement sollte dabei so angeordnet sein, dass es beim Wechsel des Schleifelements durch einen Techniker bequem erreicht und bedient werden kann. Auf diese Weise kann das Rastmittel beispielsweise durch Ziehen und gleichzeitiges Betätigen des Bedienelements schnell und ohne großen Kraftaufwand aus der Aufnahme gelöst werden.

Das Rastmittel kann durch Ziehen mit einer Mindestkraft, Ziehen mit einer gleichzeitigen Drehbewegung und/oder durch Ziehen bei gleichzeitigem Betätigen des Bedienelements aus der ihm zugeordneten Aufnahme gelöst werden. Das Ziehen mit einer Mindestkraft kommt vor allem bei der starren Ausbildung der Vorsprünge und/oder Vertiefungen an Rastmittel und zugeordneter Aufnahme in Frage, kann aber auch bei allen anderen Ausführungsformen zur Anwendung kommen. Die Mindestkraft ist dabei der Betrag einer Kraft, die notwendig ist, um das Rastmittel mit seinen Vorsprüngen an den korrespondierenden Vorsprüngen der Aufnahme vorbei- und/oder aus den korrespondierenden Vertiefungen herauszuziehen und ist von der Form und dem Material der ausgebildeten Vorsprünge des Rastmittels bzw. der Aufnahme abhängig. Das Ziehen mit gleichzeitiger Drehbewegung ist besonders vorteilhaft, wenn die Vorsprünge des Rastmittels und/oder die Vorsprünge der Aufnahme abschnittweise unterbrochen sind. Vorzugsweise kann auch ein zusätzliches Sicherungselement vorgesehen sein, das das zulässige Auftreten von dem Überschreiten der Mindestkraft, Verdrehung und Betätigung des Bedienelements ausschließt.

In noch einer weiteren Ausführungsform kann der Stromabnehmer eine Einrichtung zur Aufnahme und Ausrichtung des Trägers aufweisen, in der an jedem Befestigungspunkt zwischen dem Stromabnehmer und dem Schleifelement eine Aussparung ausgebildet ist, durch die das Rastmittel durch die Einrichtung hindurch in die ihm zugeordnete Aufnahme einführbar ist. In dieser Ausführungsform ist auf dem Stromabnehmer eine Einrichtung, wie beispielsweise eine wannenförmige Trägerstruktur, angeordnet, die den Träger des Schleifelements ganz oder teilweise aufnimmt und dabei gleichzeitig den Träger und damit das gesamte Schleifelement in seiner Position relativ zum Stromabnehmer ausrichtet. Dabei sind in der Einrichtung zur Aufnahme und Ausrichtung des Trägers Aussparungen im Bereich der Befestigungspunkte vorgesehen, so dass die Rastmittel durch diese Aussparungen in die jeweiligen Aufnahmen eingeführt werden können. Durch die Einrichtung zur Aufnahme und Ausrichtung des Trägers wird der genaue Einbau des Schleifelements vereinfacht und beschleunigt, da durch die Einrichtung zur Aufnahme und Ausrichtung des Trägers die Position des Schleifelements genau vorgegeben wird. Die Einrichtung zur Aufnahme und Ausrichtung des Trägers kann einteilig über die gesamte Länge des Trägers oder mehrteilig ausgebildet sein.

In der erfindungsgemäßen Vorrichtung kann der Träger mit dem wenigstens einen Kohleschleifstück elektrisch leitend verbunden, insbesondere verklebt, sein.

Ein weiterer Aspekt der Erfindung ist ein elektrisch antreibbares Fahrzeug, insbesondere ein elektrisch antreibbares Schienenfahrzeug, das den erfindungsgemäßen Stromabnehmer mit der erfindungsgemäßen Vorrichtung zur Befestigung eines Schleifelements an einem Stromabnehmer umfasst.

Die Erfindung wird nachfolgend anhand von Zeichnungen näher erläutert. Es zeigen:
- Figur 1: eine Seitenansicht, eine Schnittdarstellung und eine perspektivische Ansicht eines Schleifelements mit einer erfindungsgemäßen Vorrichtung zur Befestigung auf einem Stromabnehmer in einer ersten Ausführungsvariante,
- Figur 2: zwei Schnittdarstellungen der erfindungsgemäßen Vorrichtung zur Befestigung auf einem Stromabnehmer in einer ersten Ausführungsvariante,
- Figur 3: eine Seitenansicht, eine Schnittdarstellung und eine perspektivische Ansicht eines Schleifelements mit der erfindungsgemäßen Vorrichtung zur Befestigung auf einem Stromabnehmer in einer zweiten Ausführungsvariante,
- Figur 4: zwei Schnittdarstellungen der erfindungsgemäßen Vorrichtung zur Befestigung auf einem Stromabnehmer in einer zweiten Ausführungsvariante,
- Figur 5: Schnittdarstellungen für die Ausbildung von Vorsprüngen und Vertiefungen in Rastmittel und Aufnahme, und
- Figur 6: schematische Schnittdarstellungen für die Anordnung beweglich gelagerter Elemente und des Vorspannmechanismus.

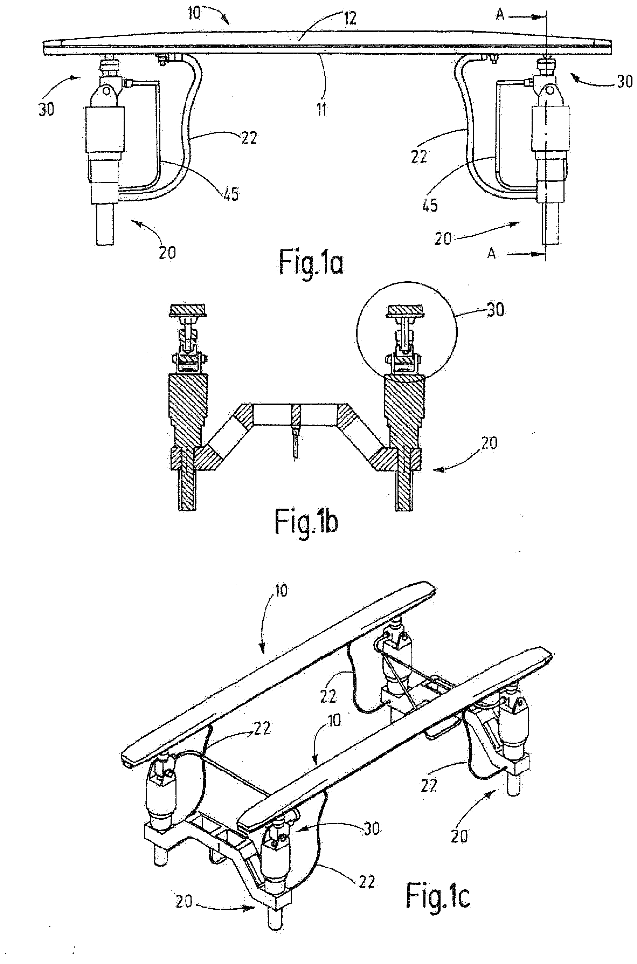

Figur 1a zeigt eine Seitenansicht eines Stromabnehmers 20 mit einem Schleifelement 10 und der erfindungsgemäßen Vorrichtung zum Befestigen des Schleifelements auf einer Einrichtung zur Aufnahme und Ausrichtung eines Trägers (Wippe) auf dem Stromabnehmer. Das Schleifelement 10 weist einen Träger 11 und ein Kohleschleifstück 12 auf, wobei das Kohleschleifstück mit einem elektrisch leitenden Kleber auf dem Träger 11 befestigt ist. Das Schleifelement 10 ist in zwei Befestigungspunkten 30 auf dem Stromabnehmer 20 befestigt. Über dem Stromabnehmer wird eine Druckluftzuführung 45 zu den Befestigungspunkten 30 geführt. In Figur 1a ist ein Schnitt A-A gekennzeichnet, der in Figur 1b dargestellt ist. Eine perspektivische Darstellung des Stromabnehmers 20 mit zwei Schleifelementen 10 aus Figuren 1a und 1b ist in Figur 1c dargestellt. Jedes Schleifelement 10 ist in jeweils zwei Befestigungspunkten 30 mit dem Stromabnehmer 20 verbunden.

In Figur 1 sind ferner elektrische Anschlüsse 22 zur Kontaktierung des Schleifelements 10 dargestellt.

Nachfolgend wird davon ausgegangen, dass das Schleifelement 10 auf einer Aufnahme der Wippe befestigt ist, auch wenn von einer Befestigung auf dem Stromabnehmer gesprochen wird.

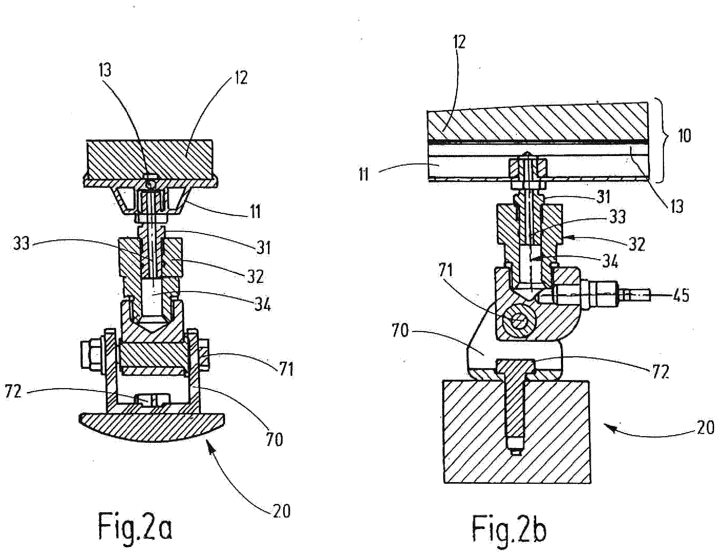

Figur 2 zeigt zwei Schnittdarstellungen der erfindungsgemäßen Vorrichtung zur Befestigung eines Schleifelements 10 auf einem Stromabnehmer 20 aus Figur 1 im Bereich eines Befestigungspunktes 30. Im Träger 11 ist ein Druckluftkanal 13 für eine Druckluftüberwachung bzw. Druckluftdetektierung des Kohleschleifstückes 12 ausgebildet. Im Befestigungspunkt 30 ist an dem Schleifelement 10 ein Rastmittel 31 ausgebildet, das im Inneren eine Durchführung für Druckluft 33 aufweist. Das Rastmittel 31 ist in eine Aufnahme 32 eingeführt und eingerastet. Die Aufnahme 32 weist eine Durchführung für Druckluft 34 auf. Durch das Ineinandergreifen von Rastmittel 31 und Aufnahme 32 bilden die Durchführungen 33 und 34 eine durchgängige Druckluftdurchführung durch den Befestigungspunkt 30. Die Druckluft wird durch eine Druckluftzuführung 45 in die Durchführung 34 der Aufnahme 32 hineingeführt, durch die Durchführung 34 der Aufnahme 32 in die Durchführung 33 des Rastmittels 31 und von dort direkt in den Druckluftkanal 13 des Trägers 11. Damit ist kein separater Anschluss der Druckluftversorgung erforderlich, da bei Einführen und Einrasten des Rastmittels 31 in die Aufnahme 32 gleichzeitig die pneumatische Verbindung hergestellt wird.

In der in Figur 2 dargestellten Ausführungsform ist die Aufnahme 32 mittels Schraubverbindung 71 in einem Adapter 70 fixiert, der wiederum durch eine weitere Schraubverbindung 72 an dem Stromabnehmer 20 befestigt ist. Dies erlaubt einen schnellen Einbau und Wechsel der Vorrichtung zur Befestigung des Schleifelements 10 am Stromabnehmer 20.

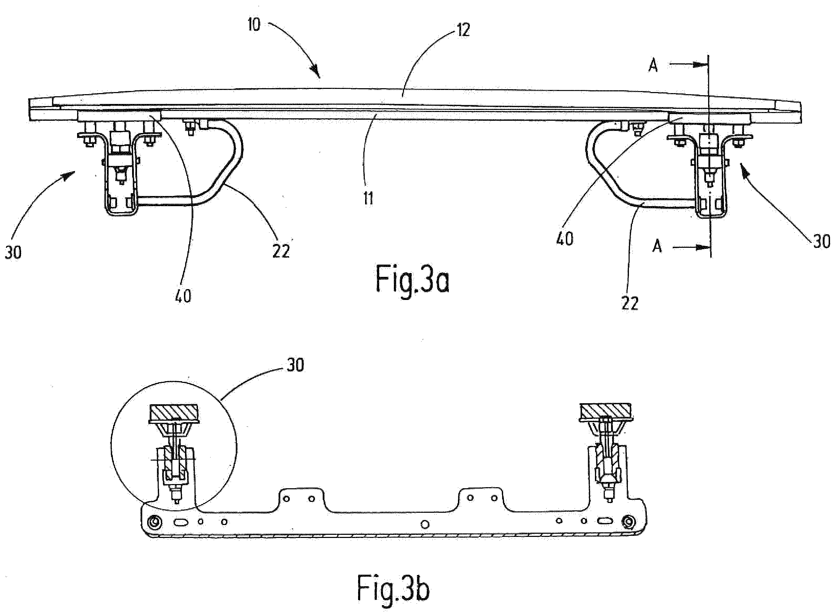

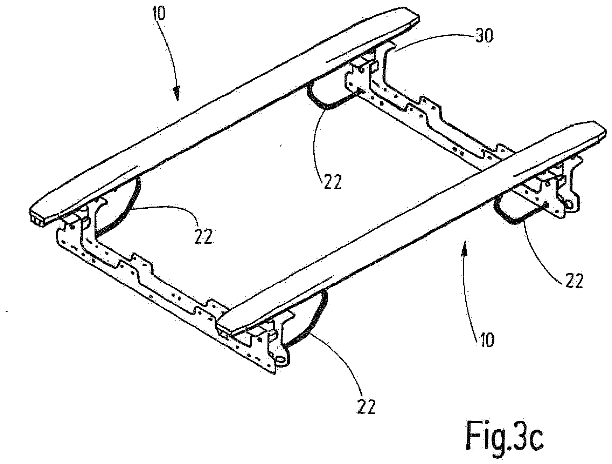

Figur 3a zeigt eine Seitenansicht und Figur 3b eine Schnittdarstellung und in Figur 3c eine Perspektivansicht eines Schleifelements 10 mit der erfindungsgemäßen Vorrichtung zur Befestigung auf einem Stromabnehmer 20 in einer zweiten Ausführungsvariante. Wie in Figur 1 ist das Schleifelement 10 mit einem Träger 11 und einem Kohleschleifstück 12 gebildet, das mit einem elektrisch leitfähigen Kleber am Träger 11 befestigt ist. Das Schleifelement 10 ist in zwei Befestigungspunkten 30 zunächst jeweils in eine Einrichtung 40 zur Aufnahme und Ausrichtung des Trägers 11 eingesetzt und durch diese hindurch mit dem Stromabnehmer 20 verbunden. Der in Figur 3a gekennzeichnete Schnitt A-A ist in Figur 3b dargestellt.

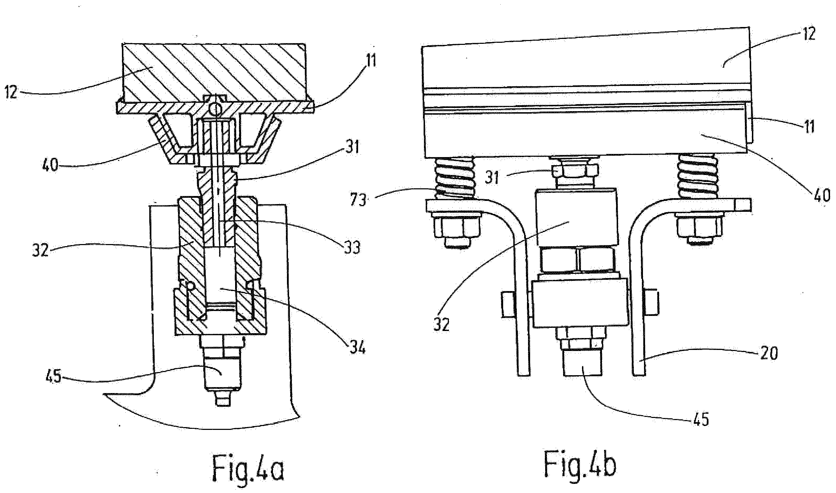

Figur 4 zeigt zwei Schnittdarstellungen des Befestigungspunktes aus Figur 3. Die Einrichtung 40 zur Aufnahme und Ausrichtung des Trägers 11 ist als wannenförmige Trägerstruktur ausgebildet, die der Form des Trägers 11 entspricht. Die wannenförmige Struktur 40 ist mittels Schraubverbindung 73 mit dem Stromabnehmer 20 verbunden. Wenn das Schleifelement 10 mit dem Träger 11 an dem Stromabnehmer 20 befestigt werden soll, wird es in beiden Befestigungspunkten 30 jeweils in die wannenförmige Struktur 40 eingelegt, und so gleichzeitig ausgerichtet. Dabei wird in jedem befestigungspunkt 30 das Rastmittel 31 durch eine Aussparung in der wannenförmigen Struktur 40 hindurch und in die Aufnahme 32 geführt, wo sie einrastet. Auch in dieser zweiten Ausführungsform ist eine Druckluftzuführung 45 vorgesehen, die Druckluft vom Stromabnehmer 20 durch die miteinander im Eingriff befindlichen Durchführungen 33 und 34 in den Druckluftkanal 13 des Trägers 11 führt.

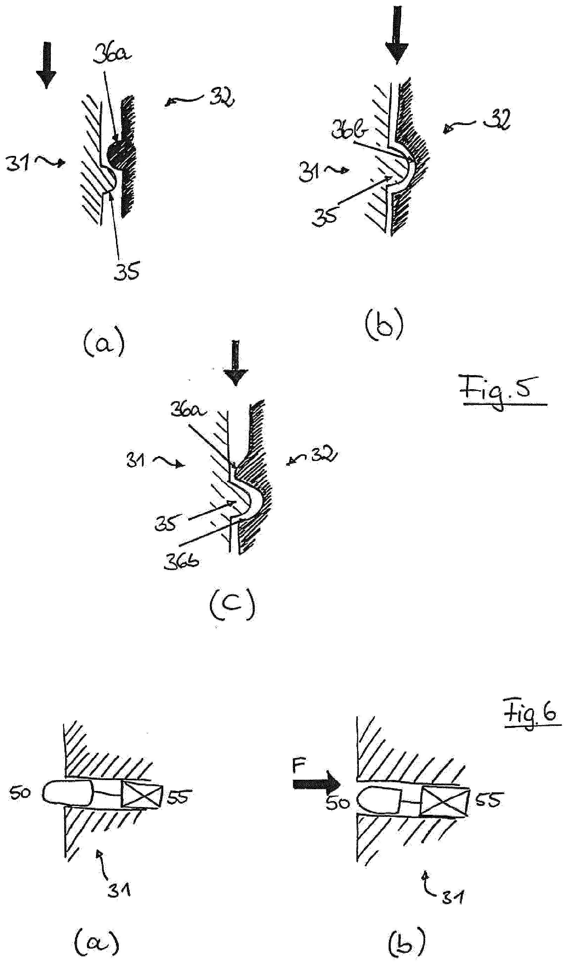

In Figur 5 werden in drei Schnittdarstellungen exemplarisch die Ausbildung von nach außen gewölbten Vorsprüngen 35 des Rastmittels 31 und korrespondierende Vorsprüngen 36a bzw. Vertiefungen 36b der Aufnahme 32 dargestellt.

Figur 5a zeigt dabei eine Ausführungsform, bei der in der Aufnahme 32 zu den Vorsprüngen 35 des Rastmittels 31 korrespondierende Vorsprünge 36a ausgebildet sind und nach dem Einführen des Rastmittels 31 in die Aufnahme 32 in Richtung des dargestellten Pfeils hinter den Vorsprüngen 36b eingerastet sind. Figur 5b zeigt die Situation, wenn in Aufnahme 32 zu den Vorsprüngen 35 des Rastmittels 31 korrespondierende Vertiefungen 36b ausgebildet sind. Figur 5c zeigt eine Kombinationsform aus Figuren 5a und 5b. In allen dargestellten Varianten können die Vorsprünge entlang des gesamten Umfangs des Rastmittels 31 bzw. des Inneren der Aufnahme 32 oder mit Unterbrechungen ausgebildet sein.

Figur 6 zeigt schematisch die Ausbildung eines Vorsprunges 35 des Rastmittels 31 als beweglich gelagertes Element 50, das mit einem Vorspannmechanismus 55 verbunden ist. In Figur 6a ist die Ruheposition des beweglich gelagerten Elements 50 dargestellt. Das beweglich gelagerte Element 50 wird durch den Vorspannmechanismus 55 nach außen gedrückt und dabei zumindest teilweise aus dem Rastmittel 31 herausragend angeordnet, so dass es einen nach außen gewölbten Vorsprung 35 bildet. Figur 6b zeigt das durch eine Krafteinwirkung, dargestellt durch einen mit F gekennzeichneten Pfeil, in das Innere des Rastmittels gedrückte beweglich gelagerte Element 50. Diese Position des beweglich gelagerten Elements 50 wird bei Einführen des Rastmittels 31 in die Aufnahme 32 eingenommen. Sobald das beweglich gelagerte Element 50 an einem Vorsprung 36a der Aufnahme 32 vorbeigeführt oder in den Bereich einer Vertiefung 36b in der Aufnahme 32 gelangt, wird das beweglich gelagerte Element 50 durch den Vorspannmechanismus 55 wieder nach außen gedrückt, so dass das beweglich gelagerte Element 50 hinter dem Vorsprung 36a oder in der Vertiefung 36b einrastet. Zudem kann der Vorspannmechanismus 55 ein Bedienelement 60 aufweisen (nicht dargestellt), das von einem Techniker bei Einbau oder Wechsel des Schleifelements betätigt werden kann, um beweglich gelagerte Elemente 50 in das Innere des Rastmittels 31 zu bewegen und so Einbau und Lösen des Schleifelements 10 vom Stromabnehmer 20 zu erleichtern.

### Bezugszeichen

- 10: Schleifelement
- 11: Träger
- 12: Kohleschleifstück
- 13: Druckluftkanal
- 20: Stromabnehmer
- 22: elektrischer Anschluss
- 30: Befestigungspunkt
- 31: Rastmittel
- 32: Aufnahme für Rastmittel 31
- 33, 34: Durchführung für Druckluft
- 35: Vorsprung des Rastmittels 31
- 36a: korrespondierender Vorsprung in der Aufnahme 32
- 36b: korrespondierende Vertiefung in der Aufnahme 32
- 40: Einrichtung zur Aufnahme und Ausrichtung des Trägers 11
- 45: Druckluftzuführung
- 50: beweglich gelagertes Element
- 55: Vorspannmechanismus
- 60: Bedienelement
- 70: Adapter zur Befestigung am Stromabnehmer 20
- 71, 72, 73: Schraubverbindung

## Patentansprüche

1. Stromabnehmer (20) zur Ableitung von elektrischer Energie von einer Fahrleitung auf ein elektrisch antreibbares Fahrzeug, wobei
die Fahrleitung ortsfest angeordnet ist und der Stromabnehmer (20) mit dem Fahrzeug verbunden ist, und
das Schleifelement (10) einen Träger (11) und wenigstens ein auf dem Träger angeordnetes Kohleschleifstück (12) umfasst, und
zwischen dem Schleifelement (10) und dem Stromabnehmer (20) mindestens ein Befestigungspunkt (30) zur Befestigung des Schleifelements (10) an dem Stromabnehmer (20) ausgebildet ist,
in jedem Befestigungspunkt (30) zwischen dem Schleifelement (10) und dem Stromabnehmer (20) auf Seiten des Schleifelements (10) mindestens ein Rastmittel (31) und auf Seiten des Stromabnehmers (20) jedem der Rastmittel (31) eine ihm zugeordnete Aufnahme (32) für dieses Rastmittel angeordnet ist, wobei
jedes Rastmittel (31) und die ihm jeweils zugeordnete Aufnahme (32) durch Einführen und Einrasten des Rastmittels (31) in die ihm zugeordnete Aufnahme (32) lösbar miteinander in Eingriff gebracht sind,
**dadurch gekennzeichnet, dass** der Träger (11) einen Druckluftkanal (13) für eine Druckluftanzeige beziehungsweise Beschädigungs- oder Verschleißanzeige des wenigstens einen Kohleschleifstückes (12) aufweist, und das Rastmittel (31) und die ihm zugeordnete Aufnahme (32) jeweils korrespondierende Durchführungen (33, 34) aufweisen, die eine durchgehende Durchführung für eine Druckluftübertragung vom Stromabnehmer (20) in den Druckluftkanal (13) im Träger (11) bilden, wenn das Rastmittel (31) und die ihm zugeordnete Aufnahme (32) lösbar miteinander in Eingriff gebracht sind.

2. Stromabnehmer nach Anspruch 1, **dadurch gekennzeichnet, dass** das Rastmittel (31) nach außen gerichtete Vorsprünge (35) aufweist, die beim Einführen des Rastmittels (31) in die dem Rastmittel zugeordnete Aufnahme (32) hinter korrespondierenden Vorsprüngen (36a) in der Aufnahme (32) und/oder in korrespondierenden Vertiefungen (36b) in der Aufnahme (32) einrasten.

3. Stromabnehmer nach Anspruch 2, **dadurch gekennzeichnet, dass** die nach außen gerichteten Vorsprünge (35) und/oder die korrespondierenden Vorsprünge (36a) und/oder die korrespondierenden Vertiefungen (36b) in der Aufnahme (32) abschnittsweise unterbrochen sind.

4. Stromabnehmer nach einem der vorhergehenden Ansprüche, **dadurch gekennzeichnet, dass** die Vorsprünge (35) als beweglich gelagerte Elemente (50) ausgebildet und mit einem Vorspannmechanismus (55) verbunden sind, so dass die die beweglich gelagerten Elemente (50) beim Einführen des Rastmittels (31) in die zugeordnete Aufnahme (32) in das Innere des Rastmittels (31) hineingedrückt und durch den Vorspannmechanismus (55) nach dem Passieren der Vorsprünge (36a) und/oder dem Erreichen der Vertiefungen (36b) aus dem Inneren des Rastmittels (31) herausgedrückt werden.

5. Stromabnehmer nach Anspruch 4, **dadurch gekennzeichnet, dass** der Vorspannmechanismus (55) ein Bedienelement (60) zur manuellen Betätigung aufweist, um die beweglich gelagerten Elemente (50) in das Innere des Rastmittels (31) zu bewegen.

6. Stromabnehmer nach einem der vorhergehenden Ansprüche, **dadurch gekennzeichnet, dass** das Rastmittel (31) durch Ziehen mit einer Mindestkraft, Ziehen mit einer gleichzeitigen Drehbewegung und/oder durch Ziehen bei gleichzeitigem Betätigen des Bedienelements (60) aus der ihm zugeordneten Aufnahme (32) lösbar ist.

7. Stromabnehmer nach einem der vorhergehenden Ansprüche, **dadurch gekennzeichnet, dass** der Stromabnehmer (20) eine Einrichtung (40) zur Aufnahme und Ausrichtung des Trägers (11) aufweist, in der an jedem Befestigungspunkt (30) zwischen dem Stromabnehmer (20) und dem Schleifelement (10) eine Aussparung ausgebildet ist, durch die das Rastmittel (31) durch die Einrichtung (40) hindurch in die ihm zugeordnete Aufnahme (32) einführbar ist.

8. Elektrisch antreibbares Fahrzeug, insbesondere elektrisch antreibbares Schienenfahrzeug, umfassend einen Stromabnehmer (20) nach einem der Ansprüche 1 bis 7.

## Claims

1. Current collector (20) for diverting electrical energy from an overhead contact line to an electrically drivable vehicle, wherein
the overhead contact line is fixedly arranged and the current collector (20) is connected to the vehicle, and
the sliding element (10) comprises a carrier (11) and at least one carbon sliding piece (12) arranged on the support, and
at least one fastening point (30) is formed between the sliding element (10) and the current collector (20) for fastening the sliding element (10) to the current collector (20),
at least one latching means (31) is arranged in each fastening point (30) between the sliding element (10) and the current collector (20) on the side of the sliding element (10) and, on the side of the current collector (20), to each of the latching means (31) a receptacle (32) associated thereto for this latching means, wherein
each latching means (31) and its respective associated receptacle (32) are releasably engaged with each other by inserting and latching the latching means (31) into its associated receptacle (32) ,
**characterised in that** the carrier (11) has a compressed air channel (13) for a compressed air indicator or damage or wear indicator of the at least one carbon sliding piece (12), and the latching means (31) and the receptacle (32) associated therewith each have corresponding lead-throughs (33, 34) forming a continuous passage for compressed air transfer from the current collector (20) into the compressed air channel (13) in the carrier (11) when the latching means (31) and its associated receptacle (32) are releasably engaged with each other.

2. Current collector according to claim 1, **characterised in that** the latching means (31) has outwardly directed projections (35) which, when the latching means (31) is inserted into the receptacle (32) associated with the latching means, latch behind corresponding projections (36a) in the receptacle (32) and/or in corresponding recesses (36b) in the receptacle (32).

3. Current collector according to claim 2, **characterised in that** the outwardly directed projections (35) and/or the corresponding projections (36a) and/or the corresponding recesses (36b) in the receptacle (32) are interrupted in sections.

4. Current collector according to one of the preceding claims, **characterised in that** the projections (35) are formed as movably mounted elements (50) and are connected to a biasing mechanism (55), so that the movably mounted elements (50) are pressed into the interior of the latching means (31) when the latching means (31) is inserted into the associated receptacle (32) and are pressed out of the interior of the latching means (31) by the biasing mechanism (55) after passing the projections (36a) and/or reaching the recesses (36b).

5. Current collector according to claim 4, **characterised in that** the biasing mechanism (55) comprises an operating element (60) for manual operation to move the movably mounted elements (50) into the interior of the latching means (31).

6. Current collector according to one of the preceding claims, **characterised in that** the latching means (31) can be released from its associated receptacle (32) by pulling with a minimum force, pulling with a simultaneous rotational movement and/or pulling with simultaneous actuation of the operating element (60).

7. Current collector according to one of the preceding claims, **characterised in that** the current collector (20) has a device (40) for receiving and aligning the carrier (11), in which a recess is formed at each fastening point (30) between the current collector (20) and the sliding element (10), through which recess the latching means (31) can be inserted through the device (40) into the receptacle (32) associated therewith.

8. Electrically drivable vehicle, in particular electrically drivable rail vehicle, comprising a current collector (20) according to any one of claims 1 to 7.

## Revendications

1. Collecteur de courant (20) pour dériver de l'énergie électrique d'une caténaire sur un véhicule à entraînement électrique, dans lequel
la caténaire est stationnaire et le collecteur de courant (20) est connecté au véhicule, et
l'élément frotteur (10) comprend un support (11) et au moins un frotteur en charbon (12) disposé sur le support, et
entre l'élément frotteur (10) et le collecteur de courant (20) est formé au moins un point de fixation (30) pour la fixation de l'élément frotteur (10) sur le collecteur de courant (20),
dans chaque point de fixation (30) entre l'élément frotteur (10) et le collecteur de courant (20), il est disposé du côté de l'élément frotteur (10) au moins un moyen d'encliquetage (31) et du côté du collecteur de courant (20) à chacun des moyens d'encliquetage (31) un logement (32) qui lui est associé pour ce moyen d'encliquetage, où
chaque moyen d'encliquetage (31) et le logement (32) qui lui est respectivement associé sont mis en prise de manière amovible l'un avec l'autre par introduction et encliquetage du moyen d'encliquetage (31) dans le logement (32) qui lui est associé,
**caractérisé en ce que** le support (11) présente un canal d'air comprimé (13) pour une indication d'air comprimé ou une indication d'endommagement ou d'usure de l'au moins un frotteur en charbon (12), et le moyen d'encliquetage (31) et le logement (32) qui lui est associé présentent chacun des passages correspondants (33, 34) qui forment un passage continu pour une transmission d'air comprimé du collecteur de courant (20) dans le canal d'air comprimé (13) dans le support (11), lorsque le moyen d'encliquetage (31) et le logement (32) qui lui est associé sont mis en prise l'un avec l'autre de manière amovible.

2. Collecteur de courant selon la revendication 1, **caractérisé en ce que** le moyen d'encliquetage (31) présente des saillies (35) dirigées vers l'extérieur qui, lors de l'introduction du moyen d'encliquetage (31) dans le logement (32) associé au moyen d'encliquetage, viennent en prise derrière des saillies correspondantes (36a) dans le logement (32) et/ou dans des creux correspondants (36b) dans le logement (32).

3. Collecteur de courant selon la revendication 2, **caractérisé en ce que** les saillies (35) orientées vers l'extérieur et/ou les saillies (36a) correspondantes et/ou les creux (36b) correspondants sont interrompus par sections dans le logement (32).

4. Collecteur de courant selon l'une des revendications précédentes, **caractérisé en ce que** les saillies (35) sont réalisées sous forme d'éléments (50) montés mobiles et sont reliées à un mécanisme de précontrainte (55), de sorte que les éléments montés mobiles (50) sont pressés à l'intérieur du moyen d'encliquetage (31) lors de l'insertion du moyen d'encliquetage (31) dans le logement associé (32) et sont pressés hors de l'intérieur du moyen d'encliquetage (31) par le mécanisme de précontrainte (55) après avoir franchi les saillies (36a) et/ou atteint les creux (36b).

5. Collecteur de courant selon la revendication 4, **caractérisé en ce que** le mécanisme de précontrainte (55) comporte un élément de commande (60) à actionner manuellement pour déplacer les éléments (50) montés mobiles à l'intérieur du moyen d'encliquetage (31).

6. Collecteur de courant selon l'une des revendications précédentes, **caractérisé en ce que** le moyen d'encliquetage (31) peut être libéré du logement (32) qui lui est associé en le tirant avec une force minimale, en le tirant avec un mouvement de rotation simultané et/ou en le tirant tout en actionnant l'élément de commande (60).

7. Collecteur de courant selon l'une des revendications précédentes, **caractérisé en ce que** le collecteur de courant (20) comporte un dispositif (40) de réception et d'orientation du support (11) dans lequel est formé, au niveau de chaque point de fixation (30) entre le collecteur de courant (20) et l'élément frotteur (10), un évidement par lequel le moyen d'encliquetage (31) peut être introduit, à travers le dispositif (40), dans le logement (32) qui lui est associé.

8. Véhicule à entraînement électrique, en particulier véhicule ferroviaire à entraînement électrique, comprenant un collecteur de courant (20) selon l'une quelconque des revendications 1 à 7.
